# EUROPEAN PATENT APPLICATION

(11) **EP 3 170 724 A1**
(43) Date of publication of application: **24.05.2017**
(21) Application number: 16198111.3
(22) Date of filing: 10.11.2016
(51) Int. Cl.: B62J 6/00, B62J 11/00

(54) **ADJUSTABLE MAGNETIC BRACKET**

(30) Priority: 18.11.2015 GB 201520342; 04.08.2016 GB 201613463
(71) Applicant: Smidsy Ltd., Clifton, Bristol BS8 1BQ (GB)
(72) Inventor: WHITE, Matthew, Bexhill-on-Sea, Sussex TN40 1HH (GB); BROOKE, Emily, Bristol BS8 1BQ (GB)
(74) Representative: Page Hargrave

(57) **Abstract**

A bracket (1) for attachment to an elongate member, comprising an inner portion, the inner surface of which conforms, in use, to an outer surface of the elongate member, said elongate member defining a longitudinal axis and an outer portion comprising a clamping means (3) operable to clamp the outer portion to the inner portion such that the outer portion at least partially surrounds the inner portion,
wherein the inner portion is shaped such that, in use, the outer portion may be clamped to the inner portion at a plurality of orientations about an axis orthogonal to the longitudinal axis

## Description

### Field of the Invention

The present invention relates to an adjustable bracket. In one aspect, it relates to an adjustable bracket for attachment of a bicycle light to a bicycle. The invention also relates to a bicycle including a bracket, a kit of parts comprising a bracket and a bicycle light, and a method of attaching a bracket to an elongate member.

The invention further relates to a bracket for attachment to an elongate member. In one aspect, it relates to a bracket for attachment of a bicycle light to a bicycle. The invention also relates to a bicycle including a bracket, a kit of parts comprising a bracket and a bicycle light, and a method of attaching a bracket to an elongate member.

### Background to the Invention

Bicycle lights are often attached to bicycles using a bracket which is fixed to a handlebar or saddle post of the bicycle. A bicycle light is then attached to the bracket once attached. Alternatively, some bicycle lights may include integral clamping means which may attach to a handlebar or saddle post of the bicycle.

In order to provide a secure attachment, such brackets or clamping means must be firmly attached. As this can result in damage to the handlebar or saddle post, conventionally a piece of tape is used as a buffer between the attachment means of the bracket or integral clamping means.

However, it is a drawback of conventional bicycle lamp brackets that they only allow the attachment of a light in one fixed orientation relative to the bicycle, usually perpendicular to the handlebar or saddle post to which the bracket is attached. That is, the bracket may not be firmly attached to a handlebar or saddle post in multiple orientations.

It is an aim of the present invention to provide an adjustable bracket that may be firmly attached to an elongate member (e.g. a handlebar or saddle post) in multiple orientations. In one aspect, it is an aim of the present invention to provide an adjustable bracket that may be attached to a handlebar or saddle post in at least one orientation which is non-perpendicular to the handlebar or saddle post to which the adjustable bracket is attached

### Summary of the Invention

In accordance with a first aspect of the invention there is provided a bracket for attachment to an elongate member, comprising:
an inner portion, the inner surface of which conforms, in use, to an outer surface of the elongate member, said elongate member defining a longitudinal axis; and
an outer portion comprising a clamping means operable to clamp the outer portion to the inner portion such that the outer portion at least partially surrounds the inner portion,
wherein the inner portion is shaped such that, in use, the outer portion may be clamped to the inner portion at a plurality of orientations about an axis orthogonal to the longitudinal axis.

The inner portion may comprise an outer surface which is of substantially arcuate cross-section. The inner portion may comprise an outer surface which is partially spherical. The inner portion may comprise an outer surface which is ribbed to provide increased friction with the outer portion.

The outer portion may comprise a pair of ends connected by the clamping means, and the clamping means may comprise a nut having an internal thread and a bolt having a corresponding threaded portion, wherein rotation of the bolt tightens its threaded portion in the nut to draw the ends of the outer portion towards one another.

The outer portion may comprise an attachment means for attaching an object to the bracket. The attachment means may comprise a magnet. The magnet may be held in the outer portion by a cup which is moulded in to the outer portion. The cup may comprise a ferritic material. The ferritic material may comprise ferritic stainless steel. The attachment means may comprise at least one recess configured to receive a corresponding projection on an object to be attached to the bracket.

In accordance with a second aspect of the invention there is provided a bicycle including a bracket as defined above, wherein the inner portion of the bracket is attached to an elongate member of the bicycle. A bicycle light may be attached to the bracket.

In accordance with a third aspect of the invention there is provided a kit of parts comprising:
a bracket as defined above (where the outer portion comprises an attachment means); and
a bicycle light,
wherein the bicycle light includes an attachment means configured to cooperate with the attachment means of the bracket to secure the bicycle light to the bracket in use.

In accordance with a fourth aspect of the invention there is provided a method of attaching a bracket to an elongate member, the method comprising the steps of:
providing a bracket comprising an inner portion, the inner surface of which conforms to an outer surface of the elongate member in use, said elongate member defining a longitudinal axis, and an outer portion comprising a clamping means operable to clamp the outer portion to the inner portion such that the outer portion at least partially surrounds the inner portion, wherein the inner portion is shaped such that, in use, the outer portion may be clamped to the inner portion at a plurality of orientations about an axis orthogonal to the longitudinal axis;
placing the inner portion of the bracket around the elongate member; and
operating the clamping means to secure the outer portion in a fixed orientation relative to the inner portion.

The inner portion may comprise an outer surface which is of substantially arcuate cross-section. The inner portion may comprise an outer surface which is partially spherical. The inner portion may comprise an outer surface which is ribbed to provide increased friction with the outer portion.

The outer portion may comprise a pair of ends connected by the clamping means, and the clamping means may comprise a nut having an internal thread and a bolt having a corresponding threaded portion, wherein rotation of the bolt tightens its threaded portion in the nut to draw the ends of the outer portion towards one another.

The outer portion may comprise an attachment means for attaching an object to the bracket. The attachment means may comprise a magnet. The magnet may be held in the outer portion by a cup which is moulded in to the outer portion. The cup may comprise a ferritic material. The ferritic material may comprise ferritic stainless steel. The attachment means may comprise at least one recess configured to receive a corresponding projection on an object to be attached to the bracket.

In accordance with a fifth aspect of the invention there is provided a bracket for attachment to an elongate member, comprising:
a clamping means operable to clamp the bracket to an elongate member in use; and
an attachment means for attaching an object to the bracket, wherein
the attachment means comprises a magnet.

The magnet may be held by a cup which is moulded in to the bracket. Said cup may comprise a ferritic material. Said ferritic material may comprise, for example, ferritic stainless steel. Said ferritic stainless steel could be, for example, 2mm in thickness.

The attachment means could comprise at least one recess configured to receive a corresponding projection on an object to be attached to the bracket. The attachment means could comprises a second recess diametrically opposite to the at least one recess configured to receive a further corresponding projection on an object to be attached to the bracket and hold the object in a first orientation relative to the attachment means. The attachment means could comprises a further pair of diametrically opposing recesses configured to receive the projection and further projection on an object to be attached to the bracket and hold the object in a second orientation relative to the attachment means. The second orientation could be perpendicular to the first orientation.

In accordance with a sixth aspect of the invention there is provided a bicycle including a bracket as defined above, wherein the bracket is attached to an elongate member of the bicycle. A bicycle light may be attached to the bracket via magnetic force. In use, the bicycle light may be rotated with respect the bracket while remaining attached via magnetic force.

In accordance with a seventh aspect of the invention there is provided a kit of parts comprising:
a bracket as defined above; and
a bicycle light,
wherein the bicycle light includes an attachment plate formed of a magnetic material.

In accordance with a eighth aspect of the invention there is provided a method of attaching an object to an elongate member, the method comprising the steps of:
providing a bracket comprising a clamping means operable to clamp the bracket to an elongate member in use and an attachment means for attaching an object to the bracket, wherein the attachment means comprises a magnet;
placing the bracket around the elongate member;
operating the clamping means to secure the bracket to the elongate member; and
attaching an object to the bracket via magnetic force, said object comprising a magnetic material.

The magnet may be held by a cup which is moulded in to the bracket. Said cup may comprise a ferritic material. Said ferritic material may comprise, for example, ferritic stainless steel. Said ferritic stainless steel could be, for example, 2mm in thickness.

The attachment means could comprise at least one recess configured to receive a corresponding projection on an object to be attached to the bracket. The attachment means could comprises a second recess diametrically opposite to the at least one recess configured to receive a further corresponding projection on an object to be attached to the bracket and hold the object in a first orientation relative to the attachment means. The attachment means could comprises a further pair of diametrically opposing recesses configured to receive the projection and further projection on an object to be attached to the bracket and hold the object in a second orientation relative to the attachment means. The second orientation could be perpendicular to the first orientation.

### Brief Description of the Drawings

The invention will now be described with reference to the accompanying drawings, in which:
Fig. 1a is a perspective view of an adjustable bracket according to an embodiment of the present invention;
Fig. 1b is a perspective view of the adjustable bracket of Fig. 1a taken from the opposite side;
Fig. 1c is an exploded view of the adjustable bracket of Fig. 1 a;
Fig. 2a is a plan view of an adjustable bracket according to an embodiment of the present invention attached to a handlebar in a first orientation;
Fig. 2b is a plan view of an adjustable bracket according to an embodiment of the present invention attached to a handlebar in a second orientation;
Fig. 3a is an upper front left perspective view of a bicycle light which is suitable for use with the bracket of the present invention;
Fig. 3b is a lower rear left perspective view of a bicycle light of Fig. 3a;
Fig. 4a is a perspective view of a bicycle light attached to an adjustable bracket according to an embodiment of the present invention in a first orientation;
Fig. 4b is a perspective view of a bicycle light attached to an adjustable bracket according to an embodiment of the present invention in a second orientation;
Fig. 5 is a cross-sectional view of the bicycle light and adjustable bracket arrangement shown in Fig. 4a;
Fig. 6a is an upper front left perspective view of an alternative bicycle light which is suitable for use with the bracket of the present invention; and
Fig. 6b is a lower rear left perspective view of a bicycle light of Fig. 6a.

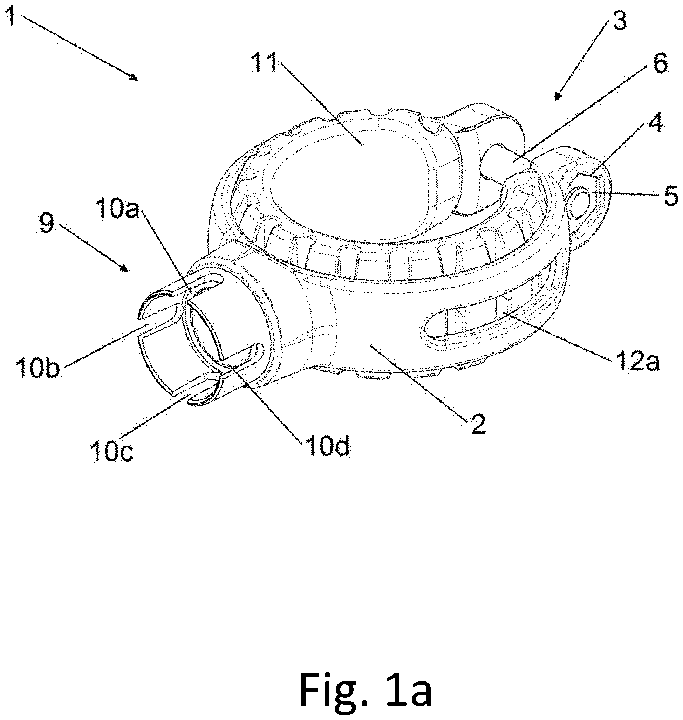

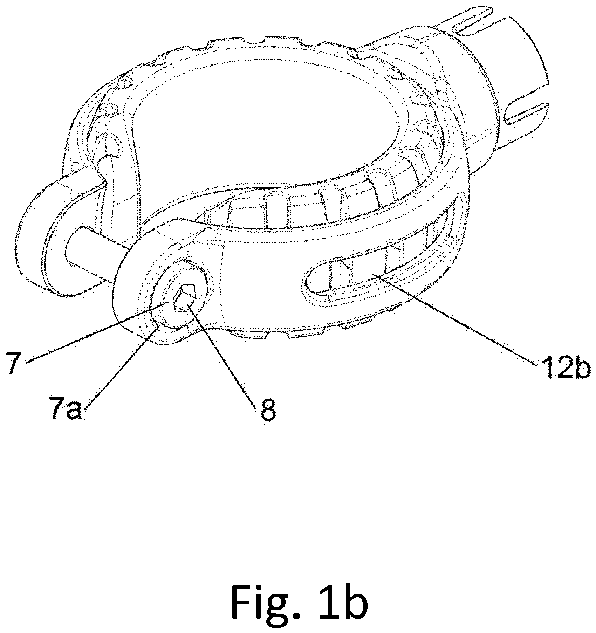

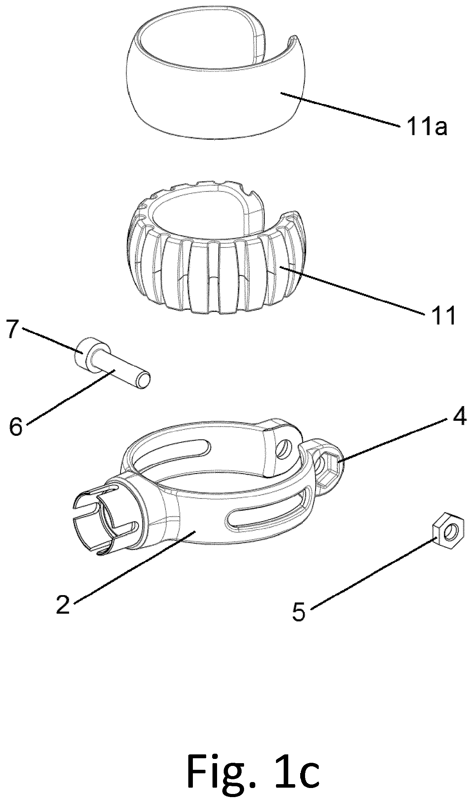

Figs. 1 a and 1b show perspective views of an adjustable bracket 1 according to an embodiment of the present invention. The bracket 1 comprises a main body 2 of substantially C-shaped cross-section advantageously formed from a resiliently deformable material, such as a plastics material. Suitable materials include polyethylene terephthalate (PET) and polycarbonate. At the open end of the C the bracket comprises a clamping means 3. The clamping means 3 comprises a hexagonal recess 4 in the main body 2 which houses a corresponding hexagonal nut 5. The nut 5 has an internal thread which receives a threaded end of a bolt 6 which has a circular head 7. The head 7 of the bolt 6 is received in a circular recess 7a in the main body 2. The head 7 has an internal hexagonal hole 8. The bolt 6 may be rotated by inserting, for example, an Allen key into the hexagonal hole 8 and rotating the Allen key. Such rotation will tighten the threaded portion of the bolt 6 in the internal thread of the nut 5 and consequently draw the open ends of the C of the main body 2 towards one another. When the bracket 1 is located on an elongate member, this will have the effect of tightening the bracket on the elongate member.

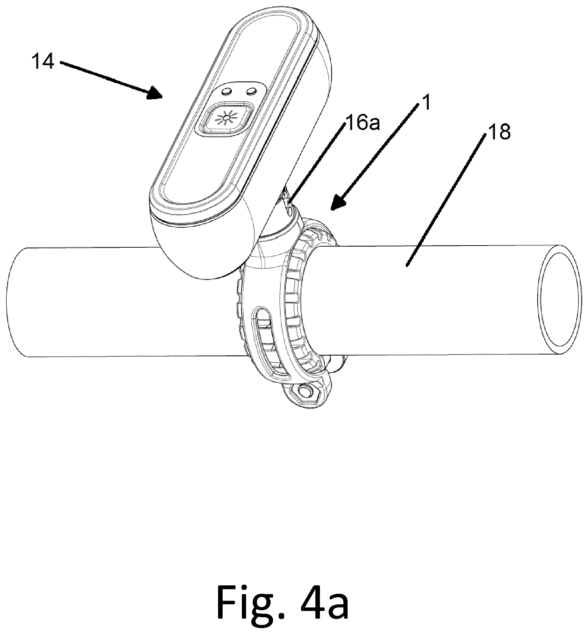

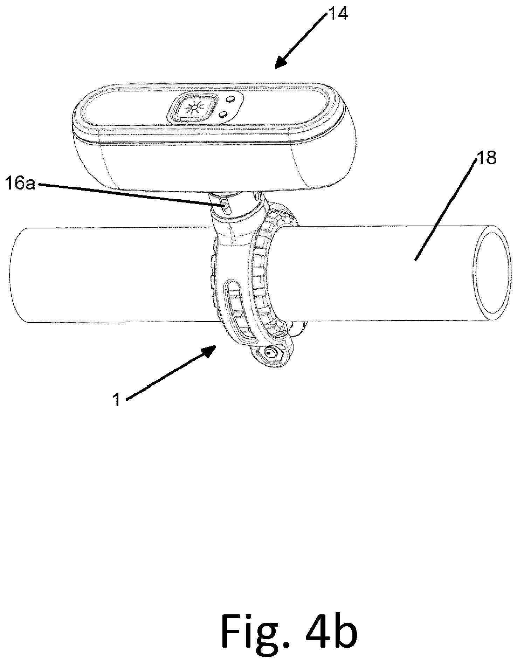

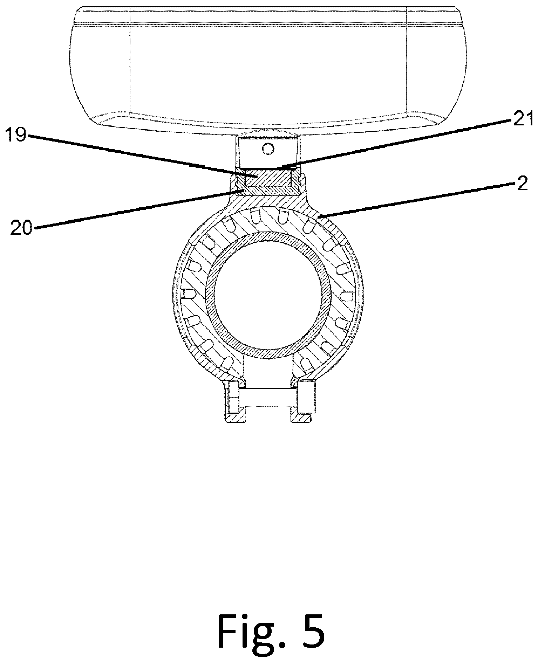

An attachment means 9 is located at the opposite end of the bracket 1 to the clamping means 3. The attachment means 9 comprises a plurality of recesses 10a-d which are configured to receive corresponding projections on a bicycle light, and an internal magnet (not shown). The recesses 10a-10d also provide a secondary function in that they allow any rain water which pools in the attachment means 9 to drain out. The attachment means 9 will be described in more detail below with respect to Figs. 4a, 4b and 5.

The bracket 1 also includes an inner portion in the form of an insert 11. The insert 11 is flexible, and has an inner surface which conforms to the shape of a cylindrical elongate member, such as a handlebar or saddle post of a bicycle, in use. The insert 11 may for example comprise a rubber or plastics material. Suitable materials include rubberised plastic, silicone or natural rubber, nylon, thermoplastic elastomer (TPE) and polycarbonate. The insert 11 may be fully flexible, wrapping around the elongate member, or resiliently deformable, in which case it may be formed as a cylinder which clips around the elongate member. The outer surface of the insert is ribbed to increase the grip between the insert 11 and the inner surface of the main body 2. The main body 2 has a pair of elongate channels 12a, 12b which allow increased flexing of the main body 2 as the clamping means 3 are tightened or untightened.

The outer surface of the insert 11 is a partial section of a sphere. This allows the main body 2 to firmly clamp against the outer surface of the insert 11 from multiple orientations or attitudes. If the axis of an elongate member to which the brackets is to be attached is used as a reference point, the main body 2 may attach to the insert using various angles of pitch (rotation around the elongate member axis), roll (rotation around an axis perpendicular to the elongate member axis) and yaw (rotation around an axis perpendicular to both the elongate member axis and the roll axis). This relationship is similar to that exhibited in a ball and socket joint, wherein the insert 11 may be considered to be a portion of the ball and the main body 2 may be considered to be a portion of the socket.

Fig. 1c shows an exploded view of the adjustable bracket of Fig. 1 a to better illustrate the components of the bracket 1. Also shown in Fig. 1c is an alternative insert 11 a. This insert 11a does not have a ribbed outer surface and may be used instead of the insert 11 shown in Figs. 1 a and 1 b. The frictional force between the main body 2 and the insert 11 a is still sufficient to firmly hold the main body 2 in place when the clamping means 3 are tightened, despite the lack of ribbing. Only one of insert 11 and insert 11 a would be present in practice, despite their both being shown in Fig. 1 c.

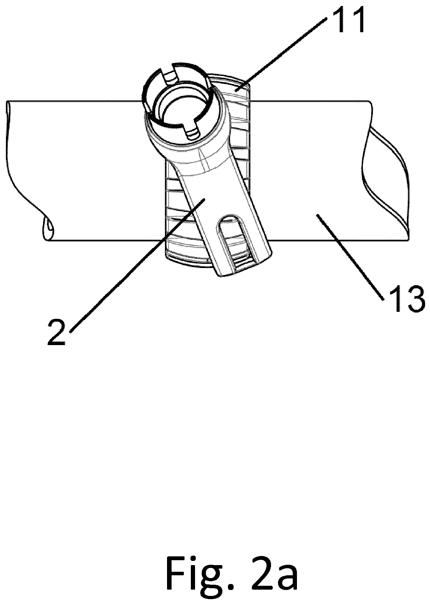

Fig. 2a shows a plan view of an adjustable bracket 1 according to an embodiment of the present invention attached to an elongate member 13 in a first orientation. It can be seen that the main body 2 has been clamped to the insert 11 at a slight angle (approximately 20 degrees) of both yaw and pitch. Consequently, a bicycle light attached to the attachment means of the bracket 1 would be securely held at a non-perpendicular orientation to the elongate member 13.

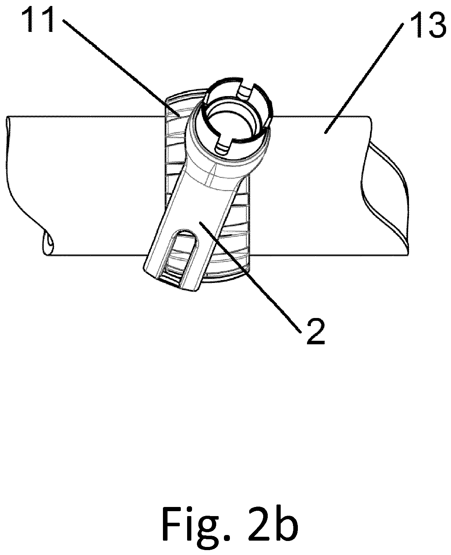

Fig. 2b shows a plan view of an adjustable bracket 1 according to an embodiment of the present invention attached to a handlebar in a second orientation. It can be seen that the main body 2 has been clamped to the insert 11 at a slight angle (approximately 20 degrees) of both yaw and pitch in the opposite direction to that shown in Fig. 2a. Consequently, a bicycle light attached to the attachment means of the bracket 1 would be securely held at a non-perpendicular orientation to the elongate member 13.

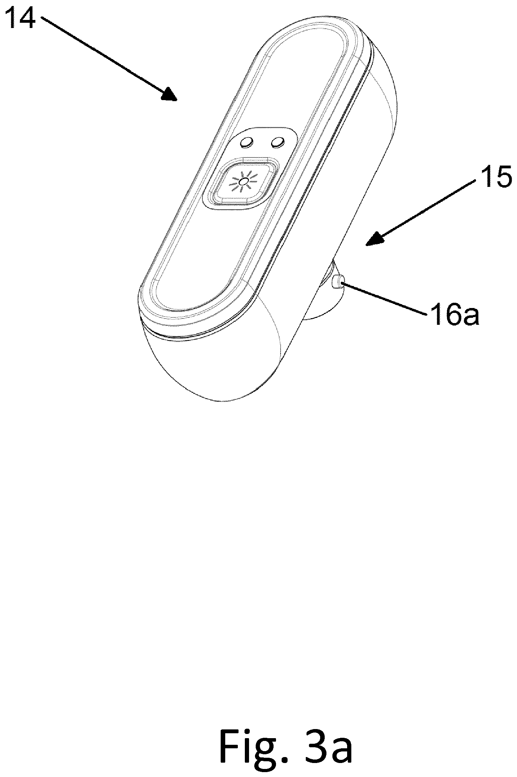

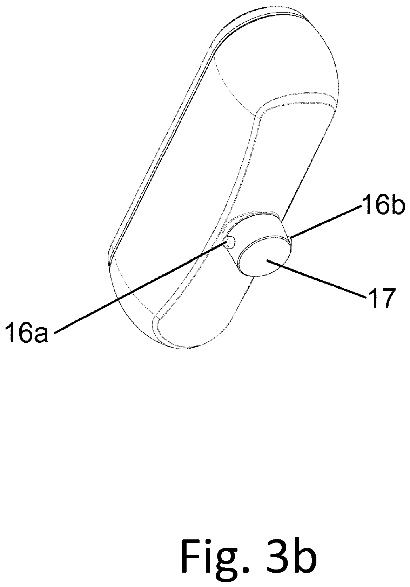

Figs. 3a and 3b show a bicycle light 14 which is suitable for use with the bracket of Fig. 1a. The bicycle light 14 has an attachment means 15 which corresponds to the attachment means 9 of the bracket 1. The bicycle light attachment means 15 comprises a pair of pins 16a, 16b which project laterally from the bicycle light 14 on diametrically opposite sides. The bicycle light attachment means 15 further comprises a metal plate 17.

Fig. 4a shows a perspective view of a bicycle light 14 attached to an adjustable bracket 1 according to an embodiment of the present invention in a first orientation. The bracket 1 has been clamped to an elongate member 18. The pins 16a, 16b of the bicycle light attachment means 15 have been slotted into the recesses 10a and 10c respectively. This gives the bicycle light 14 an orientation which is perpendicular to the axis of the elongate member 18. The metal plate 17 of the bicycle light attachment means 15 is held firmly on the bracket 1 by the bracket's internal magnet (see Fig. 5).

Fig. 4b shows a perspective view of a bicycle light 14 attached to an adjustable bracket 1 according to an embodiment of the present invention in a second orientation. The bracket 1 has been clamped to an elongate member 18. The pins 16a, 16b of the bicycle light attachment means 15 have been slotted into the recesses 10b and 10d respectively. This gives the bicycle light 14 an orientation which is parallel to the axis of the elongate member 18. Again, the metal plate 17 of the bicycle light attachment means 15 is held firmly on the bracket 1 by the bracket's internal magnet.

The combination of the pins 16a, 16b and the recesses 10a-10d means that the bicycle light 14 may only be lifted straight up or straight down, and not rotated with respect to the bracket 1. This keeps the bicycle light 14 in the orientation set by the clamping of the main body 2 on the insert 11.

Fig. 5 shows a cross-sectional view of the bicycle light 14 and adjustable bracket arrangement shown in Fig. 4a. In this view, the internal magnet 19 of the bracket 1 can be seen. The magnet 19 is held in the main body 2 of the bracket 1 by a cup 20, which is moulded into the main body 2 and surrounds the magnet 19 on all of the sides of the magnet except for the upper attachment surface 21 of the magnet. The cup 20 is formed of ferritic stainless steel 2mm in thickness. The use of a ferritic material effectively reflects the magnetic field of the magnet, resulting in an effective doubling of the strength of the magnetic field at the attachment surface 21.

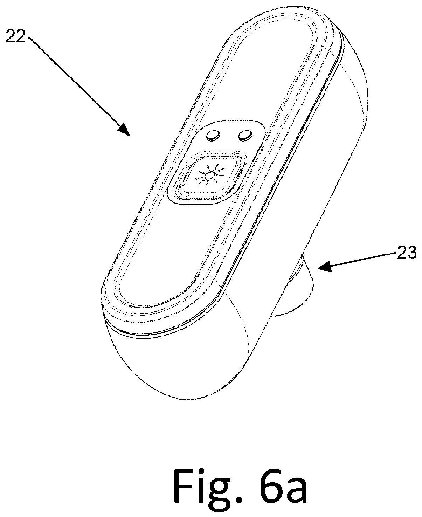

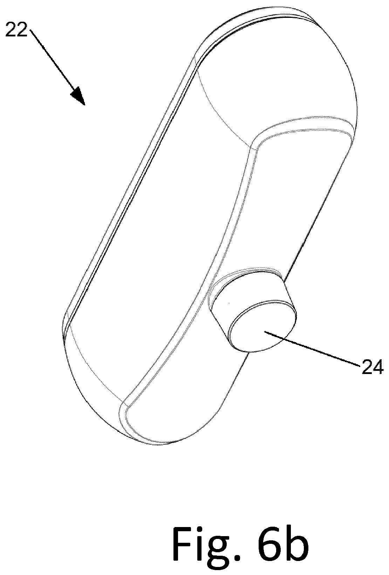

Fig. 6a shows an upper front left perspective view of an alternative bicycle light 22 which is suitable for use with the bracket of the present invention, and Fig. 6b shows a lower rear left perspective view of a bicycle light of Fig. 6a. The bicycle light 22 is similar to the bicycle light 14 shown in Fig. 3a, except that the bicycle light 22 comprises an attachment means 23 which does not have projecting pins 16a, 16b. However, the attachment means still comprises a metal plate 24 which allows the bicycle light 22 to be attached to the magnet 19 in the bracket 1 of the present invention.

In this embodiment, the bicycle light 22 may be rotated with respect to the bracket 1 in situ. This allows adjustment of the bicycle light 22 orientation without the need to untighten and retighten the clamping means 3 of the bracket 1. However, this embodiment requires a greater strength of magnet compared to that shown in Fig. 5 in order to compensate for the loss of stability provided by the interaction of the projecting pins and slots. Generally, the embodiment shown in Figs. 3a and 3b would be more suitable for attaching bicycle lights which must strictly remain in a fixed orientation relative to the bicycle such as, for example, laser bicycle lights. The embodiment shown in Figs. 6a and 6b would be more suitable for attaching bicycle lights such as rear bicycle lights, which a user may wish to alter in orientation more frequently.

The 'pinless' embodiment shown in Figs. 6a and 6b may be used with a bracket that does not have recesses 10a-d in its attachment means. However, in practice, it is generally preferred to retain these recesses on the bracket even if a pinless bicycle light is being used, in order to provide drainage for any rainwater which might pool in the attachment means 9, and to avoid the cost of retooling.

Various alternatives and modifications within the scope of the invention will be apparent to those skilled in the art. For example, while the bracket has been shown in the figures having an insert with a cylindrically curved inner side (for attachment to a cylindrical elongate member), the insert could have two straight sides for attachment to an elongate member of square or rectangular cross-section in the manner of a G-clamp. As a further example, while the bracket of the present invention has been described and shown in conjunction with a bicycle light, the invention is not restricted to this. It could also be used to attach, for example, an action camera such as a GoPro (RTM) to an elongate member. The bracket of the present invention has been described as being suitable for attachment to an elongate member of a bicycle, however in practice it could be used to attach an object to any suitable elongate member, e.g. a car spoiler, a ski pole, etc.

## Claims

1. A bracket for attachment to an elongate member, comprising:
an inner portion, the inner surface of which conforms, in use, to an outer surface of the elongate member, said elongate member defining a longitudinal axis; and
an outer portion comprising a clamping means operable to clamp the outer portion to the inner portion such that the outer portion at least partially surrounds the inner portion,
wherein the inner portion is shaped such that, in use, the outer portion may be clamped to the inner portion at a plurality of orientations about an axis orthogonal to the longitudinal axis.

2. A bracket according to claim 1, wherein the inner portion comprises an outer surface which is of substantially arcuate cross-section.

3. A bracket according to either of claims 1 and 2, wherein the inner portion comprises an outer surface which is partially spherical.

4. A bracket according to any of claims 1 to 3, wherein the inner portion comprises an outer surface which is ribbed to provide increased friction with the outer portion.

5. A bracket according to any of claims 1 to 4, wherein the outer portion comprises a pair of ends connected by the clamping means, and the clamping means comprises a nut having an internal thread and a bolt having a corresponding threaded portion, wherein rotation of the bolt tightens its threaded portion in the nut to draw the ends of the outer portion towards one another.

6. A bracket according to any of claims 1 to 5, wherein the outer portion comprises an attachment means for attaching an object to the bracket, the attachment means comprising a magnet.

7. A bracket according to claim 6, wherein the magnet is held in the outer portion by a cup which is moulded in to the outer portion, the cup comprising ferritic stainless steel.

8. A bicycle including a bracket according to any preceding claim, wherein the inner portion of the bracket is attached to an elongate member of the bicycle.

9. A method of attaching a bracket to an elongate member, the method comprising the steps of:
providing a bracket comprising an inner portion, the inner surface of which conforms to an outer surface of the elongate member in use, said elongate member defining a longitudinal axis, and an outer portion comprising a clamping means operable to clamp the outer portion to the inner portion such that the outer portion at least partially surrounds the inner portion, wherein the inner portion is shaped such that, in use, the outer portion may be clamped to the inner portion at a plurality of orientations about an axis orthogonal to the longitudinal axis;
placing the inner portion of the bracket around the elongate member; and
operating the clamping means to secure the outer portion in a fixed orientation relative to the inner portion.

10. A method according to claim 9, wherein the inner portion comprises an outer surface which is substantially arcuate in cross-section.

11. A method according to claim 9 or 10, wherein the inner portion comprises an outer surface which is the surface of a spherical segment.

12. A method according to any of claims 9 to 11, wherein the inner portion comprises an outer surface which is ribbed to provide increased friction with the outer portion.

13. A method according to any of claims 9 to 12, wherein the outer portion comprises a pair of ends connected by the clamping means, and the clamping means comprises a nut having an internal thread and a bolt having a corresponding threaded portion, wherein rotation of the bolt tightens its threaded portion in the nut to draw the ends of the outer portion towards one another.

14. A method according to any of claims 9 to 13, wherein the outer portion comprises an attachment means for attaching an object to the bracket, the attachment means comprising a magnet.

15. A method according to claim 14, wherein the magnet is held in the outer portion by a cup which is moulded in to the outer portion, the cup comprising ferritic stainless steel.
